# EUROPEAN PATENT SPECIFICATION

(11) **EP 1 491 650 B1**
(45) Date of publication and mention of the grant of the patent: **18.01.2006**
(21) Application number: 03405464.3
(22) Date of filing: 26.06.2003
(51) Int. Cl.: C23C 4/02, F01D 5/28, C23C 28/00, C23C 28/02

(54) **A method of depositing a coating system**
Verfahren für das Auftragen eines mehrschichtigen Systems
Méthode d'application d'un système de couches

(43) Date of publication of application: 29.12.2004
(73) Proprietor: Alstom Technology Ltd, 5400 Baden (CH)
(72) Inventor: Khan, Adbus Suttar, Dr., 5408 Ennetbaden (CH); Duda, Thomas, Dr., 5415 Nussbaumen (CH); Jung, Arnd, Dr., 5200 Brugg (CH); Schnell, Alexander, 5408 Ennetbaden (CH)

(56) References cited:
- EP-A- 1 327 702
- US-A- 4 095 003
- US-A- 5 238 752
- US-A1- 2002 132 132

## Description

### FIELD OF INVENTION

The invention relates to a method of depositing a MCrAIY-coating system on the external surface of an article according to claim 1.

### STATE OF THE ART

Components designed for the use in the area of high temperature, e.g. blades or vanes of a gas turbine, are usually coated with environmentally resistant coatings. The coating protects the base material against corrosion and oxidation due to the thermal effect of the hot environment. Most turbine components are coated for the protection from oxidation and/or corrosion with, for example, a MCrAlY coating (base coat) and some are also coated with a Thermal Barrier Coating (TBC) for thermal insulation.

MCrAlY protective overlay coatings are widely known in the prior art. They are a family of high temperature coatings, wherein M is selected from one or a combination of iron, nickel and cobalt. As an example US-A-3,528,861 or US-A-4,585,481 are disclosing such kind of oxidation resistant coatings.

There are two types of MCrAIY based on composition and microstructure: γ/γ' and γ/β. The field of γ/β-coatings have been an active area of research and a series of patents has been issued. E.g. a NiCrAlY coating is described in US-A-3,754,903 and a CoCrAlY coating in US-A-3,676,058 while US-A-4,346,137 discloses an improved high temperature fatigue resistance NiCoCrAlY coating. US-A-4,419,416, US-A-4,585,481, RE-32,121 and US-A-A-4,743,514 describe MCrAlY coatings containing Si and Hf. US-A-4,313,760 discloses a superalloy coating composition with good oxidation, corrosion and fatigue resistance. Further examples of development of oxidation resistant MCrAlY coatings are cited here: US-A-5,035,958, US-A-5,154,885, US-A-5, 455,119, US-A-6,280,857, US-A-6, 207,297 and US-A-6, 221,181.

In contrast to the γ/β-coatings, the γ/γ'-type of MCrAlY coatings, known e.g. from US-A-4,973,445, are relatively new. The unique feature of this type of γ/γ'-coatings is that their thermal expansion mismatch is close to zero in combination with a high ductility, what make these coatings more resistant to thermal fatigue. However the limitations are the low aluminum content and hence their low reservoir of aluminum.

The field of γ/γ'-type of MCrAlY coatings, known e.g. from US-A-4,973,445, are limited. The interesting feature of this type of coatings is that they have low thermal expansion coefficient and a high ductility that make these coatings more resistant to thermal fatigue. However the limitation of these coating is their low aluminum content. Due to repeated spalling of oxides during thermal cycling the γ/γ'-coating is unable to sustain the alumina growth.

The development in 1980's in MCrAlY was primarily focused towards improving the oxidation resistance of MCrAlY via, for example, by over aluminising. The approach consists of deposition of MCrAlY by plasma spraying i.e. APS, VPS, LPPS, and HVOF or by EB-PVD and then enriching the surface of MCrAlY by aluminising. For example, US-A-3,873,347 and US-A-4,080,486 deposited MCrAIY to a thickness in the range from 75 to 125 µm by EB-PVD and aluminised the MCrAlY to a thickness of 25 to 50 µm. While US-A-4,005,989, first aluminized the substrate followed by MCrAlY deposition. The MCrAlY coating thickness in this case was from 25 to 125 µm while the aluminide layer thickness ranged from 25 to 62 µm. The Al content in the aluminide was in the range from 22 to 36 percent.

In yet another patent, US-A-4,910,092, deposited first a MCrAlY coatings by plasma spraying and then over aluminised it by a pack process. The thickness of the MCrAlY coating ranged approximately from 12 to 75 µm while the aluminised thickness ranged from 25 to 100 µm. The coating system exhibited improved oxidation resistance and thermal fatigue resistance. The aluminised layer had aluminum content in the range from 21 to 35 percent.

US-A-6,129,991 used a Chemical Vapor Deposition (CVD) method to aluminize the MCrAIY surface, the CVD process forms aluminide coatings free of P and S contamination known to adversely affect the oxidation resistance of coatings. The aluminide coating containing Hf, Zr and Si was also deposited by CVD. The thickness of the aluminide overcoat was from 12 to 100 µm.

There are also references in the literature in improving the fatigue resistance of coatings. The approach consists of modifying the composition of coatings to reduce the thermal expansion mismatch between the coating and the substrate. For example, US-A-4,758,480 developed coatings by modifying the composition of the superalloy substrate. The coatings had thermal expansion coefficient close to the substrate, hence had a low thermal expansion mismatch and showed a higher fatigue resistance compared to a typical MCrAIY coating. In a separate patent, US-A-4, 346,137, Pt and/or Rh was added to MCrAIY to reduce the thermal expansion of the coatings and the modified coatings showed higher fatigue resistance.

Reducing the thermal expansion mismatch between the coating and the substrate had a beneficial effect in improving the fatigue resistance of coatings; yet there is another approach to further enhance the fatigue resistance - this is by using a relatively thin coating. For example, in industrial gas turbine engines where the components are expected to run thousands of hours, the coating thickness used is generally in the range of 350 to 650 µm in contrast to 100 to 200 µm coatings for aircraft turbine blades and vanes. A lower coating thickness in industrial gas turbine blades and vanes will provide a benefit towards a fatigue life. However, one would like to have a process with no line of sight with good control in coating thickness and is able to coat leading edge and airfoil transition areas uniformly. Furthermore, coatings should not be contaminated by excess of oxygen known to adversely affect the fatigue life.

Unlike plasma spray, the electroplating process has a good coating thickness control and has no line of sight limitation. In a series of patents, US-A-5, 558,758, US-A-5, 824,205 and US-A-5,833,829 described the deposition of MCrAIY coatings by electroplated process. The process consists of depositing coatings via a precursor, i.e. CrAIM2 powder in a M1 bath where M2 is one or more of Si, Ti, Hf, Ga, Nb, Mn, Pt and rare earth elements and M1 consists of Ni, Co, Fe alone or in combination. The as-deposited coating is heat-treated to obtain the desired coating structure. Since there is no line of sight limitation a complex contoured surface can be also coated by the electroplated process with good thickness control. However coating by electroplated process appears to be sensitive to composition i.e. not all coatings compositions can be applied effectively by the process.

The reference is made here of electroplated MCrAlY coatings developed by applicant; the patent application on the subject of plated MCrAlY coatings is filed with an application with the application number EP02405881.0.

### SUMMARY OF THE INVENTION

It is object of the present invention to describe a method of depositing a coating resisting to crack during thermal cycling prevalent in the engine with an increased Thermal Mechanical Fatigue (TMF)-Life.

According to the present invention a method was found, comprising the steps of depositing MCrAIY coating wherein the coating consists of multiple layers of γ/β-MCrAIY and/or γ/γ'-MCrAIY wherein at least the outer layer of all layers is deposited by an electroplated method.

The present disclosure of the invention consists of providing multiple interfaces in overlay or bond coating in order to reduce crack initiation and propagation. The interface in the structure provides hindrance to crack initiation and propagation, since cracks must re-initiate at the interface and then propagate through the coatings. In the disclosed invention the coating layers are suitably disposed in preference to chemical composition, modulas, thermal expansion coefficient, i.e. physical-mechanical and metallurgical properties. The layer spacing in the disclosed is contemplated as tens of micros and will be based on coating chemical activity and diffusional stability.

As an example, the coating could consists of alternating layers of two different materials, such as one layer consisting of y/β-MCrAIY and the other layer consisting of γ/γ'-MCrAIY. The thickness of one of the alternating layers could be significantly less than the other.

Before the deposition of the coating layers the external surface of the article and/or the outer layer of the deposited layers can be aluminised.

The deposition of the coating-layers can be followed by a heat treatment of 1100ºC for 2 to 20 hours, e.g. at 1140ºC for 2 hours, in an inert atmosphere, such as argon, air, hydrogen or in a vacuum.

On top of the applied layers a layer of a ceramic thermal barrier coating (TBC) such as yttria-stabilzed zirconia (YSZ) with a suitable composition can be applied by various methods (APS, EB-PVD).

### BRIEF DESCRIPTION OF DRAWINGS

Preferred embodiments of the invention are illustrated in the accompanying drawings, in which
- **Fig. 1**: shows a gas turbine blade and
- **Fig. 2**: one embodiment of a multi-layered-coating on the external surface of the article according to the present invention and

The drawings show only parts important for the invention.

### DETAILED DESCRIPTION OF INVENTION

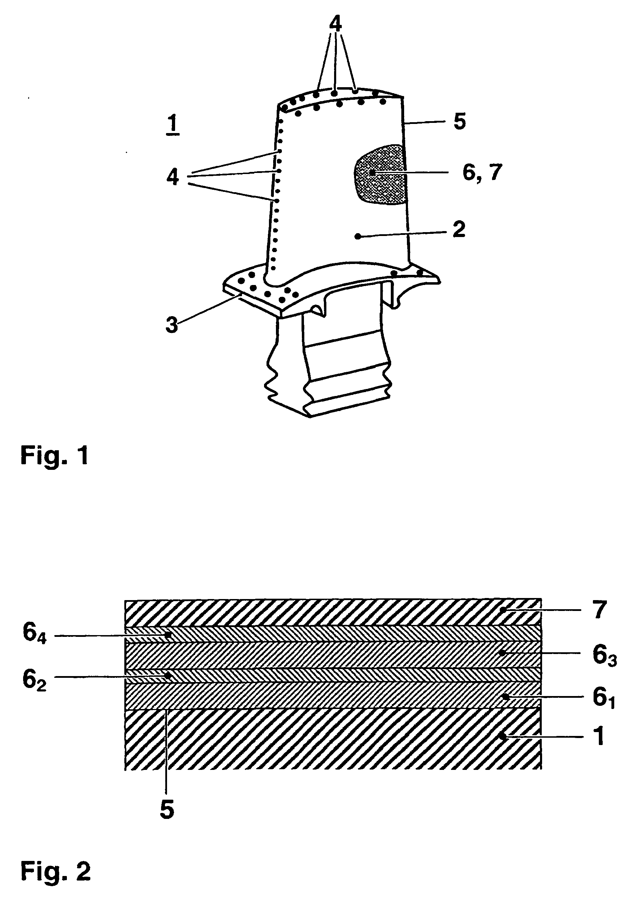

The present invention is generally applicable to components that operate within environments characterised by relatively high temperature, and are therefore subjected to severe thermal stresses and thermal cycling. Notable examples of such components include the high and low pressure vanes and blades, shrouds, combustor liners and augmentor hardware of gas turbine engines. Fig. 1 shows as an example such an article 1 as blades or vanes comprising a blade 2 against which hot combustion gases are directed during operation of the gas turbine engine, a cavity, not visible in Figure 1, and cooling holes 4, which are on the external surface 5 of the component 1 as well as on the platform 3 of the component. Through the cooling holes 4 cooling air is ducted during operation of the engine to cool the external surface 5. The external surface 5 is subjected to severe attack by oxidation, corrosion and erosion due to the hot combustion gases. In many cases the article 1 consists of a nickel or cobalt base super alloy such as disclosed, by way of an example, in US-A-5,759,301. In principle, the article 1 can be single crystal (SX), directionally solidified (DS) or polycrystalline. While the advantages of this invention is described with reference to a turbine blade or vane as shown in Fig. 1, the invention is generally applicable to any component on which a coating system may be used to protect the component from its environment.

As seen in Fig. 2 it is disclosed a method of depositing the layered coating on the external surface 5 of the article 1. The bond or overlay MCrAIY-coating 6 on top of the external surface 5 of the article 1 consists of four different layers of MCrAlY 6₁, 6₂, 6₃, 6₄, The layers of MCrAIY 6₁, 6₂, 6₃, 6₄ can have a γ/β- or a γ/γ'-structure or a γ-solid solution. The layers 6₁, 6₂, 6₃, 6₄ could include a dispersion of a β-phase. The number of layers 6₁, 6₂, 6₃, 6₄ in Fig. 2 are only given as an example and could vary on the specific embodiment.

At least the outer layer 6₄ of all layers 6₁, 6₂, 6₃, 6₄ is deposited by an electroplated method with a thickness range of 10 to 100 µm and with a preferred range of 10 to 50 µm. A lower thickness of that layer 6₄ is likely to produce the shorter crack and possibly a slower crack growth rate. The present invention consists of providing multiple interfaces in overlay or bond coating in order to reduce crack initiation and propagation. The interface in the structure provides hindrance to crack initiation and propagation, since cracks must re-initiate at the interface and then propagate through the coatings. On the other hand, the electroplated process can deposit a thin MCrAlY coating uniformly. The electroplated process is a viable process to apply a coating uniformly over a turbine blade and vane with a good control of coating thickness and there is no of line of sight limitation in the process. The process also deposits coatings without any excess of oxygen impurity known to be detrimental to fatigue resistance of coating.

It is believed that in a multilayer coating system, thickness of the individual layers 6₁, 6₂, 6₃, 6₄ as well as the total thickness of the coating are important, because it is generally known that a thin coating is better in fatigue resistance than a thick coating. The coating layers 6₁, 6₂, 6₃, 6₄ are placed to provide interfaces for crack blunting formed by placement of the layers 6₁, 6₂, 6₃, 6₄. The thickness and composition of each layer 6₁, 6₂, 6₃, 6₄ can vary. In the disclosed invention the coating layers are suitably disposed in preference to chemical composition, modulas, thermal expansion coefficient, i.e. physical-mechanical and metallurgical properties. The layer spacing in the disclosed is contemplated as tens of micrometers and will be based on coating chemical activity and diffusional stability.

As an example, the coating could consists of alternating layers of two different materials, such as one layer consisting of γ/β-MCrAlY and the other layer consisting of γ/γ'-MCrAlY. The thickness of one of the alternating layers 6₁, 6₂, 6₃, 6₄ could be significantly is less than the other.

Here are give some examples of γ/β- and γ/γ' -MCrAlY coatings which could according to the present invention be used.

| γ/β-MCrAlY | γ/γ'-MCrAlY |
|---|---|
| Ni-23Co-18Cr-12Al-0,5Y | Ni-23Co-18Cr-8Al-0.5 Y |
| Ni-23Co-16Cr-12Al-0,5Y | Ni-23Co-18Cr-8Al-0.5 Y-0.5Hf |
| Ni-23Co-18Cr-10Al-0.5Y | Ni-25Cr-5Al-1Ta-0,5Y-1.2Si |

A layer of MCrAlY 6₁, 6₂, 6₃, 6₄ with a γ/β-structure can contain 0.01 to 3% Fe. The different MCrAlY layers 6₁, 6₂, 6₃, 6₄ can contain besides Y, reactive elements such as Hf, Zr, Si, Ru, and lanthanides alone or in combination.

The layers of MCrAlY-coating 6₁, 6₂, 6₃, 6₄ can be applied e.g. by at least one of the coating methods of plasma spray, wire arc spray, high velocity oxy-fuel (HVOF), air plasma spray (APS), low pressure plasma spray (LPPS), vacuum plasma spray (VPS), electrolytic or galvanic deposition, Physical Vapour Deposition (PVD), Chemical Vapour Deposition (CVD), slurry or painting or paint spray or sol gel or any other suitable methods known in the

### prior art.

The deposition of the of the coating-layers 6 is following by a heat treatment of 1100ºC for 2 to 20 hours, e.g. at 1140ºC for 2 hours, in an inert atmosphere, such as argon, air, hydrogen or in a vacuum.

Before the deposition of the coating layers 6₁, 6₂, 6₃, 6₄ the external surface 5 of the article 1 and/or the outer layer 6₄ of the deposited layers 6₁, 6₂, 6₃, 6₄ can be aluminised.

On top of the applied layers as seen in Fig. 2 a layer 7 of a ceramic thermal barrier coating (TBC) such as yttria-stabilzed zirconia (YSZ), though other ceramic materials and other stabilizer could be used, such as zirconia stabilized by ceria (CeO₂), scandia (Sc₂O₃) or other oxides. The ceramic layer is deposited to a thickness that is sufficient to provide the required thermal protection for the underlying substrate, generally in the order of about 125 to 800 µm.

While our invention has been described by an example, it is apparent that other forms could be adopted by one skilled in the art. Accordingly, the scope of our invention is to be limited only by the attached claims.

### REFERENCE NUMBERS

- 1: Article
- 2: Blade
- 3: Platform
- 4: Cooling holes
- 5: External surface of article 1
- 6: Bond or overlay MCrAlY-coating
- 6₁, 6₂, 6₃, 6₄: Layer of MCrAlY
- 7: Layer of ceramic coating

## Claims

1. A method of depositing a MCrAIY-coating system (6, 7) on top of the external surface (5) of an article (1) comprising the step of
- depositing at least three layers (6₁, 6₂, 6₃, 6₄), consisting of MCrAIY with a γ/β- or a γ/γ'-structure or a γ-solid solution on the external surface (5) of the article (1), wherein
- at least the outer layer (6₄) of all layers (6₁, 6₂, 6₃, 6₄) is deposited by an electroplated method.

2. The method of depositing a coating according to claim 1, comprising the step of depositing at least three layers (6₁, 6₂, 6₃, 6₄) consisting of MCrAIY with a γ/β- or a γ/γ'-structure or a γ-solid solution with a dispersion of a β-phase in the MCrAIY layer (6₁, 6₂, 6₃, 6₄).

3. The method of depositing a coating according to claim 1 or 2, wherein an outer layer (6₄) is deposited in the range of 10 to 100 µm.

4. The method of depositing a coating according to claim 3, wherein an outer layer (6₄) is deposited in the range of 10 to 50 µm.

5. The method of depositing a coating according to any of the claims 1 to 4, comprising the step of depositing on the external surface (5) of the article (1) alternating layers of two different materials.

6. The method of depositing a coating according to any of the claims 1 to 5, comprising the step of depositing on the external surface (5) of the article (1) alternating layers of two different materials, wherein the thickness of one of the alternating layers (6₁, 6₂, 6₃, 6₄) is less than the other.

7. The method of depositing a coating according to claim 5 or 6, comprising the step of depositing on the external surface (5) of the article (1) alternating layers (6₁, 6₂, 6₃, 6₄), one layer consisting of γ/β-MCrAIY and the other layer consisting of γ/γ'-MCrAIY.

8. The method of depositing a coating according to any of the claims 1 to 7, comprising the step of aluminising the external surface (5) of the article (1) prior to depositing of layers (6₁, 6₂, 6₃, 6₄) of MCrAIY.

9. The method of depositing a coating according to any of the claims 1 to 7, comprising the step of aluminising the deposited layers (6₁, 6₂, 6₃, 6₄).

10. The method of depositing a coating according to any of the claims 1 to 9, wherein the deposited coating-layers (6₁, 6₂, 6₃, 6₄) are heat treated at a temperature in a range from 1000º to 1150ºC for 2 to 20 hours in air, argon, hydrogen or in a vacuum.

11. The method of depositing a coating according to claim 10, wherein deposited coating-layers (6₁, 6₂, 6₃, 6₄) are heat treated at a temperature at 1140°C for 2 hours.

12. The method of depositing a coating according to any of the claims 1 to 11, comprising the step of depositing a layer (7) of a ceramic thermal barrier coating (TBC) on top of said layers of MCrAIY or the aluminised layer.

13. The method of depositing a coating according to any of the claims 1 to 12, comprising the step of depositing the layers (6₁, 6₂, 6₃, 6₄) of MCrAIY by one or more of the following methods: electroplated process, a thermal spray processes, Physical Vapour Deposition (PVD), Chemical Vapour Deposition (CVD), High velocity oxy-fuel (HVOF), vacuum plasma spray (VPS), low pressure plasma spray (LPPS), air plasma spray (APS), slurry or painting or paint spray or sol gel.

14. The method of depositing a coating according to any of the preceding claims, comprising the step of depositing a coating on top of the external surface (5) of a single crystal (SX), directionally solidified (DS) article (1) or equiaxed article (1).

## Patentansprüche

1. Verfahren zum Abscheiden eines MCrAIY-Überzugssystems (6, 7) auf der Oberseite der Außenoberfläche (5) eines Gegenstands (1) umfassend den Schritt
- des Abscheidens von wenigstens drei Schichten (6₁, 6₂, 6₃, 6₄), bestehend aus MCrAlY mit einer γ/β- oder einer γ/γ'-Struktur oder als γ-feste Lösung, auf der Außenoberfläche (5) des Gegenstands (1), wobei
- wenigstens die Außenschicht (6₄) aller Schichten (6₁, 6₂, 6₃, 6₄) mittels eines Galvanoverfahrens abgeschieden wird.

2. Verfahren zum Abscheiden eines Überzugs nach Anspruch 1, umfassend den Schritt des Abscheidens von wenigstens drei Schichten (6₁, 6₂, 6₃, 6₄), bestehend aus MCrAlY mit einer γ/β- oder einer γ/γ'-Struktur oder als γ-feste Lösung, mit einer Dispersion einer β-Phase in der MCrAlY-Schicht (6₁, 6₂, 6₃, 6₄) .

3. Verfahren zum Abscheiden eines Überzugs nach Anspruch 1 oder 2, wobei eine Außenschicht (6₄) im Bereich von 10 bis 100 µm abgeschieden wird.

4. Verfahren zum Abscheiden eines Überzugs nach Anspruch 3, wobei eine Außenschicht (6₄) im Bereich von 10 bis 50 µm abgeschieden wird.

5. Verfahren zum Abscheiden eines Überzugs nach einem der Ansprüche 1 bis 4, umfassend den Schritt des Abscheidens von alternierenden Schichten aus zwei verschiedenen Materialien auf der Außenoberfläche (5) des Gegenstands (1).

6. Verfahren zum Abscheiden eines Überzugs nach einem der Ansprüche 1 bis 5, umfassend den Schritt des Abscheidens von alternierenden Schichten aus zwei verschiedenen Materialien auf der Außenoberfläche (5) des Gegenstands (1), wobei die Dicke einer der alternierenden Schichten (6₁, 6₂, 6₃, 6₄) kleiner ist als die der anderen.

7. Verfahren zum Abscheiden eines Überzugs nach Anspruch 5 oder 6, umfassend den Schritt des Abscheidens von alternierenden Schichten (6₁, 6₂, 6₃, 6₄) auf der Außenoberfläche (5) des Gegenstands (1), wobei eine Schicht aus γ/β-MCrAIY besteht und die andere Schicht aus γ/γ'-MCrAIY besteht.

8. Verfahren zum Abscheiden eines Überzugs nach einem der Ansprüche 1 bis 7, umfassend den Schritt des Alitierens der Außenoberfläche (5) des Gegenstands (1) vor dem Abscheiden der MCrAlY-Schichten (6₁, 6₂, 6₃, 6₄) .

9. Verfahren zum Abscheiden eines Überzugs nach einem der Ansprüche 1 bis 7, umfassend den Schritt des Alitierens der abgeschiedenen Schichten (6₁, 6₂, 6₃, 6₄).

10. Verfahren zum Abscheiden eines Überzugs nach einem der Ansprüche 1 bis 9, wobei die abgeschiedenen Überzugsschichten (6₁, 6₂, 6₃, 6₄) einer 2 bis 20 Stunden langen Wärmebehandlung bei einer Temperatur im Bereich von 1000 bis 1150 °C in Luft, Argon, Wasserstoff oder Vakuum unterworfen werden.

11. Verfahren zum Abscheiden eines Überzugs nach Anspruch 10, wobei die abgeschiedenen Überzugsschichten (6₁, 6₂, 6₃, 6₄) einer 2 Stunden langen Wärmebehandlung bei einer Temperatur von 1140 °C unterworfen werden.

12. Verfahren zum Abscheiden eines Überzugs nach einem der Ansprüche 1 bis 11, umfassend den Schritt des Abscheidens einer Schicht (7) einer keramischen Wärmesperrschicht (TBC) auf der Oberseite der MCrAIY-Schichten oder der alitierten Schicht.

13. Verfahren zum Abscheiden eines Überzugs nach einem der Ansprüche 1 bis 12, umfassend den Schritt des Abscheidens der MCrAlY-Schichten (6₁, 6₂, 6₃, 6₄) mittels eines oder mehrerer der folgenden Verfahren: Galvanoverfahren, ein Wärmespritzverfahren, physikalische Abscheidung aus der Gasphase (PVD), chemische Abscheidung aus der Gasphase (CVD), Hochgeschwindigkeitsflammspritzen (HVOF), Vakuum-Plasmaspritzen (VPS), Niederdruck-Plasmaspritzen (LPPS), atmosphärisches Plasmaspritzen (APS), Aufschlämmung oder Streichen oder Farbspritzen oder Sol-Gel.

14. Verfahren zum Abscheiden eines Überzugs nach einem der vorstehenden Ansprüche, umfassend den Schritt des Abscheidens eines Überzugs auf der Oberseite der Außenoberfläche (5) eines einkristallin (SX), stängelkristallin (DS) Gegenstands (1) oder eines gleichachsigen Gegenstands (1).

## Revendications

1. Procédé de déposition d'un système de revêtement MCrAIY (6, 7) sur le dessus de la surface externe (5) d'un article (1), comprenant l'étape
- de déposition d'au moins trois couches (6₁, 6₂, 6₃, 6₄), constituées de MCrAlY avec une structure γ/β ou γ/γ' ou avec une solution solide γ sur la surface externe (5) de l'article (1),
dans lequel
- au moins la couche externe (6₄) de toutes les couches (6₁, 6₂, 6₃, 6₄) est déposée par un procédé d'électro placage.

2. Procédé de déposition d'un revêtement selon la revendication 1, comprenant l'étape de déposition d'au moins trois couches (6₁,6₂,6₃,6₄), constituées de MCrAlY avec une structure γ/β ou γ/γ' ou avec une solution solide γ avec une dispersion d'une phase β dans la couche MCrAlY (6₁, 6₂, 6₃, 6₄) .

3. Procédé de déposition d'un revêtement selon la revendication 1 ou 2, dans lequel une couche externe (6₄) est déposée dans le domaine de 10 à 100 µm.

4. Procédé de déposition d'un revêtement selon la revendication 3, dans lequel une couche externe (6₄) est déposée dans le domaine de 10 à 50 µm.

5. Procédé de déposition d'un revêtement selon l'une quelconque des revendications 1 à 4, comprenant l'étape de déposition sur la surface externe (5) de l'article (1) de couches alternantes de deux matériaux différents.

6. Procédé de déposition d'un revêtement selon l'une quelconque des revendications 1 à 5, comprenant l'étape de déposition sur la surface externe (5) de l'article (1) de couches alternantes de deux matériaux différents, dans lequel l'épaisseur de l'une des couches alternantes (6₁,6₂,6₃,6₄) est inférieure aux autres.

7. Procédé de déposition d'un revêtement selon la revendication 5 ou 6, comprenant l'étape de déposition sur la surface externe (5) de l'article (1) de couches alternantes (6₁,6₂,6₃,6₄), une couche étant constituée de γ/β-MCrAlY et l'autre couche étant constituée de γ/γ'-MCrAlY.

8. Procédé de déposition d'un revêtement selon l'une quelconque des revendications 1 à 7, comprenant l'étape d'aluminisation de la surface externe (5) de l'article (1) avant la déposition des couches (6₁,6₂,6₃,6₄) de MCrAlY.

9. Procédé de déposition d'un revêtement selon l'une quelconque des revendications 1 à 7, comprenant l'étape d'aluminisation des couches déposées (6₁, 6₂, 6₃, 6₄).

10. Procédé de déposition d'un revêtement selon l'une quelconque des revendications 1 à 9, dans lequel les couches de revêtement déposées (6₁,6₂,6₃,6₄) subissent un traitement à chaud à une température dans le domaine de 1000 à 1150°C pendant une période de 2 à 20 heures dans l'air, l'argon, l'hydrogène ou dans un vide.

11. Procédé de déposition d'un revêtement selon la revendication 10, dans lequel les couches de revêtement déposées (6₁,6₂,6₃,6₄) subissent un traitement à chaud à une température de 1140°C pendant 2 heures.

12. Procédé de déposition d'un revêtement selon l'une quelconque des revendications 1 à 11, comprenant l'étape de déposition d'une couche (7) d'un revêtement de barrière thermique céramique (TBC) sur le dessus desdites couches de MCrAIY ou de la couche aluminée.

13. Procédé de déposition d'un revêtement selon l'une quelconque des revendications 1 à 12, comprenant l'étape de déposition des couches (6₁,6₂,6₃,6₄) de MCrAIY par un ou plusieurs des procédés suivants: processus d'électro placage, processus de pulvérisation thermique, déposition physique en phase vapeur (PVD), déposition chimique en phase vapeur (CVD), processus à l'oxygaz combustible à haute vélocité (HVOF), pulvérisation au plasma à vide (VPS), pulvérisation au plasma à basse pression (LPPS), pulvérisation au plasma à air (APS), suspension ou peinture ou peinture au pistolet ou gel sol.

14. Procédé de déposition d'un revêtement selon l'une quelconque des revendications précédentes, comprenant l'étape de déposition d'un revêtement sur le dessus de la surface externe (5) d'un article (1) solidifié d'une manière directionnelle (DS) à cristal unique (SX) ou d'un article (1) équiaxe.
